# EUROPÄISCHE PATENTSCHRIFT

(11) **EP 0 465 837 B1**
(45) Veröffentlichungstag und Bekanntmachung des Hinweises auf die Patenterteilung: **16.03.1994**
(21) Anmeldenummer: 91109351.6
(22) Anmeldetag: 07.06.1991
(51) Int. Cl.: F16L 11/10

(54) **Radial bewehrter Kunststoffschlauch**
Radial reinforced plastic hose
Tuyau flexible en matière plastique renforcé radialement

(30) Priorität: 11.06.1990 DE 9006584 U
(43) Veröffentlichungstag der Anmeldung: 15.01.1992
(73) Patentinhaber: ALBER KUNSTSTOFFTECHNIK GmbH, D-77971 Kippenheim (DE)
(72) Erfinder: Tassilo Alber Freiherr von Glanstätten, W-7634 Kippheim (DE)
(74) Vertreter: Barz, Peter, Dr.

(56) Entgegenhaltungen:
- EP-A- 0 104 835
- EP-A- 0 117 210
- EP-A- 0 121 691
- EP-A- 0 143 659
- EP-A- 0 269 338
- GB-A- 861 770

## Beschreibung

Die Erfindung betrifft einen radial bewehrten Kunststoffschlauch, insbesondere einen flexiblen, radial bewehrten Kunststoffschlauch mit gleitfähiger Oberfläche, der für alle Anwendungen in Frage kommt, bei denen der Schlauch in Führungen gleiten muß (EP-A 121 691).

Küchen- und Badarmaturen, bei denen der Schlauch aus Bohrungen oder Krümmern herausgezogen und wieder versenkt werden kann, erfreuen sich aufgrund ihrer praktischen und vielseitigen Anwendungsmöglichkeiten steigender Beliebtheit. Versenkbare Metallschläuche haben jedoch den Nachteil, daß sie schwer sind, einen großen Biegeradius haben und beim Herausziehen und Versenken erhebliche Geräusche entwickeln. Andererseits sind herkömmliche Kunststoffschläuche für diesen Anwendungszweck nicht geeignet, da ihrer Oberfläche nicht die erforderliche Gleitfähigkeit aufweist.

Aufgabe der Erfindung ist es daher, einen Kunststoffschlauch bereitzustellen, der aufgrund verbesserter Flexibiliät und Oberflächen-Gleitfähigkeit vorwiegend dort eingesetzt werden kann, wo Schläuche in Bohrungen oder Führungen gleiten müssen.

Gegenstand der Erfindung ist ein radial bewehrter Kunststoffschlauch, mit Merkmelen entsprechend Anspruch 1.

Im folgenden wird die Erfindung anhand bevorzugter Ausführungsformen unter Bezug auf die Zeichnung näher erläutert.

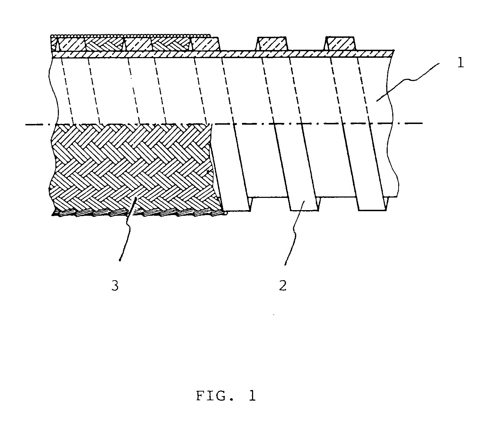

In Fig. 1 ist ein Kunststoffschlauch schematisch dargestellt, der auf einem Innenschlauch (1) eine Bewehrung (2) aufweist. Der Innenschlauch (1) kann aus weichem, thermoplastischem oder elastomerem Kunststoff bestehen, z. B. aus Weich-PVC, Polyurethan, Polyethylen oder Ethylen-Copolymeren, wie Ethylen-Vinylacetat-Copolymer oder Ethylen-Acrylat-Copolymer. Die Wandstärke des Innenschlauchs kann z. B. 0,2 bis 1,0 mm, sein Innendurchmesser 5 bis 20 mm betragen.

Die Bewehrung (2) besteht aus einem thermoplastischen oder elastomeren Kunststoff, wie Polyurethan, Hart-PVC, Polypropylen, Polycarbonat oder Acrylnitril-Butadien-Styrol-Copolymer. Die Bewehrung (2) hat rechteckigen, z. B. quadratischen, oder runden Querschnitt. Bewehrungsbänder sind z. B. 1 bis 5 mm breit und 1 bis 3 mm hoch. Vorzugsweise umfaßt jedoch die Bewehrung keine axial zum Innenschlauch verlaufenden Verstärkungselemente, z. B. Verstärkungsfäden, da diese die Flexibilität des Schlauchs unter Druck beeinträchtigen. Die Bewehrung (2) ist mit dem Innenschlauch (1) z. B. verschweißt oder verklebt oder kann durch eine tiefgezogene Kunststoff-Außenhaut, die vorzugsweise aus dem gleichen Material wie der Innenschlauch besteht, mit diesem verbunden sein.

Der bewehrte Kunststoffschlauch ist mit einer Umflechtung (3) versehen und zwar so dicht, daß die nicht bewehrten Bereiche des Innenschlauchs (1) durch die Umflechtung (3) bei Druckbelastung gestützt werden. Die Umflechtung besteht aus thermoplastischem oder elastomerem Kunststoff, z. B. aus Polyolefinen, wie gerecktem oder ungerecktem Polyethylen, Polypropylen, Polyamiden, modifiziertem Hart-PVC, Cellulosederivaten oder ähnlichen harten oder halbharten Kunststoffen. Zur Herstellung der Umflechtung (3) verwendet man Monofile von z. B. 0,2 bis 0,5 mm Durchmesser oder Bändchen von z.B. 0,2 bis 0,5 mm Stärke und einer Breite von z. B. 0,5 bis 1,5 mm, die unmittelbar auf die Bewehrung (2) dicht an dicht und vorzugsweise ausschließlich diagonal geflochten werden; d.h. auch hier werden axial zum Innenschlauch (1) verlaufende Verstärkungselemente vermieden, um die gewünschte Flexibilität zu gewährleisten. Die Druckfestigkeit des Schlauchs läßt sich anhand des Flechtwinkels und der Anzahl der geflochtenen Fäden optimieren; diese kann z. B. bei 24 bis einigen hundert (z. B. 300) Fäden liegen.
Durch Verwendung verschieden gefärbter Fäden können mehrfarbige Flechtmuster erzeugt werden. Auch metallische Effekte sind möglich, indem man das Flechtwerk metallisiert oder mit metallischen oder metallisierten Fäden oder Bändchen ausrüstet, wie dies nach dem Stand der Technik auch bekannt ist (DE-A-30 18 417 oder DE-A-30 25 707).

Der erfindungsgemäße Kunststoffschlauch zeichnet sich aus durch ein äußerst geringes Metergewicht, sehr leichte Handhabung und außerordentlich hohe Flexibilität im Vergleich zu Schläuchen mit ähnlich hoher Druckfestigkeit. Er besitzt eine sehr gleitfähige Oberfläche und eignet sich daher ausgezeichnet für alle Anwendungen, bei denen Schläuche in Führungen gleiten, z. B. versenkbare Küchen- oder Badarmaturen.

## Patentansprüche

1. Radial bewehrter Kunststoffschlauch, bestehend aus einem Innenschlauch (1) aus weichem, thermoplastischem oder elastomerem Kunststoff, einer darauf aufgebrachten ring- oder spiralförmigen Kunststoff-Bewehrung (2) und einer den Kunststoffschlauch dicht umschließenden Umflechtung (3) aus thermoplastischem oder elastomerem Kunststoff.

2. Kunststoffschlauch nach Anspruch 1, dadurch gekennzeichnet, daß die Bewehrung (2) einen rechteckigen oder runden Querschnitt hat.

3. Kunststoffschlauch nach Anspruch 1 oder 2, dadurch gekennzeichnet, daß die Umflechtung (3) aus dicht an dicht und ausschließlich diagonal geflochtenen Monofilen besteht.

4. Kunststoffschlauch nach Anspruch 1 oder 2, dadurch gekennzeichnet, daß die Umflechtung (3) aus dicht an dicht und ausschließlich diagonal geflochtenen Bändchen oder aus Bändchen und Monofilen besteht.

## Claims

1. A radially reinforced plastic hose consisting of an inner hose (1) comprised of a soft thermoplastic or elastomeric plastic material, a ring- or spiral-shaped plastic wrapping (2) provided thereon, and a braid (3) of thermoplastic or elastomeric plastic material tightly disposed around the plastic hose.

2. A plastic hose according to Claim 1, characterized in that said plastic wrapping (2) has a rectangular or round cross section.

3. A plastic hose according to Claim 1 or 2, characterized in that said braid (3) consists of monofilaments disposed tightly together and exclusively in a diagonal braid.

4. A plastic hose according to Claim 1 or 2, characterized in that said braid (3) consists of strips disposed tightly together and exclusively in a diagonal braid or of strips and monofilaments.

## Revendications

1. Tuyau en matière plastique, armé radialement, composé d'un tuyau intérieur (1) en une matière plastique souple, thermoplastique ou élastomère, d'une armature (2) en matière plastique en forme d'anneau ou de spirale, rapportée sur le tuyau intérieur, et d'une tresse périphérique (3) en une matière plastique thermoplastique ou élastomère, enserrant étroitement le tuyau en matière plastique.

2. Tuyau en matière plastique selon la revendication 1, caractérisé en ce que l'armature (2) présente une section droite rectangulaire ou ronde.

3. Tuyau en matière plastique selon la revendication 1 ou 2, caractérisé en ce que la tresse périphérique (3) est constituée de monofils tressés de manière jointive et exclusivement en diagonale.

4. Tuyau en matière plastique selon la revendication 1 ou 2, caractérisé en ce que la tresse périphérique (3) est constituée de petits rubans ou de petits rubans et de monofils tressés de manière jointive et exclusivement en diagonale.
